# EUROPEAN PATENT SPECIFICATION

(11) **EP 4 414 256 B1**
(45) Date of publication and mention of the grant of the patent: **18.02.2026**
(21) Application number: 23182405.3
(22) Date of filing: 29.06.2023
(51) Int. Cl.: B62M 6/45, B60L 50/20

(54) **ELECTRIC BICYCLE, SYSTEM FOR DRIVING ELECTRIC BICYCLE, AND CONTROL METHOD THEREOF**
ELEKTRISCHES FAHRRAD, SYSTEM ZUM ANTRIEB EINES ELEKTRISCHEN FAHRRADS UND STEUERUNGSVERFAHREN DAFÜR
BICYCLETTE ÉLECTRIQUE, SYSTÈME D'ENTRAÎNEMENT DE BICYCLETTE ÉLECTRIQUE ET SON PROCÉDÉ DE COMMANDE

(30) Priority: 09.02.2023 KR 20230017374
(43) Date of publication of application: 14.08.2024
(73) Proprietor: HL Mando Corporation, Pyeongtaek-si, Gyeonggi-do 17962 (KR)
(72) Inventor: HONG, Kyungho, 16823 Yongin-si (KR); KIM, Youngsin, 14102 Anyang-si (KR); KU, Hyun, 16904 Yongin-si (KR); LEE, Seungkyung, 14021 Anyang-si (KR)
(74) Representative: BCKIP Part mbB

(56) References cited:
- WO-A1-2018/199773
- KR-A- 20120 001 834
- KR-B1- 101 896 022
- US-A1- 2011 266 082
- US-A1- 2022 194 520
- US-B2- 8 550 199

## Description

### BACKGROUND

### 1. Field

The present invention relates to an electric bicycle, a system for driving the electric bicycle, and a control method thereof, and more particularly, to an electric bicycle that does not have a chain connecting a pedal and a wheel and changes a traveling mode according to a pedaling direction, a system for driving the electric bicycle, and a control method thereof.

### 2. Description of the Related Art

In general, an electric bicycle includes a motor for rotating a wheel and a battery for supplying electric power to the motor. The electric bicycle is propelled by rotating the wheel by the motor. At this time, the battery is charged by operating a generator connected to a pedal by operation of rotating the pedal.

Basically, a bicycle moves by stepping on pedals with both feet, and a chain transmits a pedaling force from a person to the wheel.

Such a chain has problems in that the chain has a complicated structure, occupies a large area of the bicycle, is detached from the wheel, gets a bicyclist's clothes caught in the chain, contaminates the clothes, and so on.

In order to solve the problems, an electric bicycle with no chain has recently been developed and used.

In a bicycle with a chain in the related art, when the pedal is rotated by stepping on the pedal in a forward direction, a rear wheel moves forward through the chain. At this time, a gear connected to a pedal is connected to a freewheel, so that when the pedal is rotated in the forward direction slower than the gear or the pedal is rotated in a reverse direction, the gear and the pedal are separated, thereby allowing the bicycle to coast without a bicyclist stepping on the pedal. At this time, in order to brake the forward-moving bicycle, a friction brake for contacting a brake pad to the wheel by holding a brake lever provided on a handle is used.

Meanwhile, for the electric bicycle, a motor is provided and thus braking through regenerative braking is possible. In this case, a device for receiving an input is required so that regenerative braking can be performed according to the bicyclist's willingness to regenerative braking.

US 2022 / 0 194 520 A1 discloses a chainless electric bicycle which comprises a generator to which pedals are coupled, and a motor coupled to a wheel of the bicycle. Regenerative braking of the bicycle includes operating the motor as a generator, wherein the regenerative braking is initiated by pulling a handle lever, and a brake torque is determined and applied based on the level of squeeze of the lever.

### SUMMARY

Therefore, it is an object of the present invention to provide an electric bicycle that does not have a chain connecting a pedal and a wheel and changes a traveling mode according to a pedaling direction, a system for driving the electric bicycle, and a control method thereof.

To this end, the present invention provides a system in accordance with claim 1, a method in accordance with claim 7, and an electric bicycle in accordance with claim 12.

Advantageous embodiments of the invention are set forth in the dependent claims, in the description which follows and the figures of the drawings.

In accordance with a first aspect of the present invention, a system for driving an electric bicycle includes a generator configured to generate a voltage upon being driven by a pedal of the electric bicycle, a generator current sensor configured to detect a current output by the generator, a pedal position sensor configured to detect a position of the pedal, a motor configured to be mounted on at least one wheel of a front wheel or a rear wheel and configured to provide a rotational force to the at least one wheel, a motor position sensor configured to detect a position of the motor, a motor current sensor configured to detect a current of the motor, and a controller configured to control the currents of the generator and the motor, and the controller is configured to detect a rotational speed and a rotational direction of the motor based on the detected position of the motor, determine a current traveling direction based on the rotational direction of the motor, detect a rotational speed and a rotational direction of the pedal based on the detected position of the pedal, determine traveling or braking based on the current traveling direction and the rotational direction of the pedal, and control the motor so that regenerative braking is performed when braking is determined.

The controller is configured to determine braking when the current traveling direction and the rotational direction of the pedal are opposite.

The controller may be configured to determine a requested regenerative braking amount based on the rotational speed of the pedal when braking is determined and control the motor so that braking is performed according to the requested regenerative braking amount.

The controller may be configured to increase the requested regenerative braking amount as the rotational speed of the pedal increases.

The controller may be configured to determine a requested regenerative braking amount based on the rotational speed of the pedal when braking is determined, determine a maximum regenerative braking amount based on a current traveling environment of the electric bicycle, determine whether the requested regenerative braking amount is less than or equal to the maximum regenerative braking amount, control the motor to perform braking according to the requested regenerative braking amount when the requested regenerative braking amount is less than or equal to the maximum regenerative braking amount, and control the motor to perform braking according to the maximum regenerative braking amount when the requested regenerative braking amount exceeds the maximum regenerative braking amount.

The controller may be configured to determine a target pedal torque based on the detected position of the pedal and the detected position of the motor when braking is determined and control the current of the generator so that a pedal torque according to the detected current of the generator reaches the determined target pedal torque.

According to the invention, the controller is configured to determine braking when the current traveling direction and the rotational direction of the pedal are opposite and a regenerative braking command is input.

The controller is configured to determine traveling when the current traveling direction is the same as the rotational direction of the pedal, or when the rotational speed of the motor is zero and the rotational speed of the pedal is not zero, and determine a target pedal torque based on a position difference between the detected position of the pedal and the detected position of the motor when traveling is determined, determine a target motor acceleration according to the determined target pedal torque, and control the current of the motor so that an acceleration of the motor reaches the determined target motor acceleration.

The controller may increase the determined target motor acceleration as the determined target pedal torque increases.

The controller may be configured to determine reverse traveling when the rotational speed of the motor is zero and the rotational direction of the pedal is a reverse direction and the rotational speed thereof is not zero.

The controller may be configured to determine a target pedal torque based on a position difference between the detected position of the pedal and the detected position of the motor during reverse traveling, control the current of the generator so that the pedal torque according to the detected current of the generator reaches the determined target pedal torque, determine a target motor acceleration according to the determined target pedal torque, and control the current of the motor so that the acceleration of the motor reaches the determined target motor acceleration.

The controller may be configured to determine reverse traveling when the rotational speed of the motor is zero and the rotational direction of the pedal is a reverse direction and the rotational speed thereof is not zero, and a reverse traveling command is input.

In accordance with a second aspect of the present invention, a control method of a system for driving an electric bicycle including a generator configured to generate a voltage upon being driven by an electric bicycle's pedal and a motor mounted on at least one wheel of a front wheel or a rear wheel and configured to provide a rotational force to the at least one wheel includes detecting a position of the pedal through a pedal position sensor, detecting a position of the motor through a motor position sensor, detecting a rotational speed and a rotational direction of the motor based on the detected position of the motor, determining a current traveling direction based on the rotational direction of the motor, detecting a rotational speed and a rotational direction of the pedal based on the detected position of the pedal, determining traveling or braking based on the current traveling direction and the rotational direction of the pedal, and controlling the motor so that regenerative braking is performed when braking is determined. The method may be carried out using a system in accordance with the first aspect of the invention.

The determining of traveling or braking includes determining braking when the current traveling direction and the rotational direction of the pedal are opposite.

The control method may further include determining a requested regenerative braking amount based on the rotational speed of the pedal when braking is determined and controlling the motor so that braking is performed according to the requested regenerative braking amount.

The determining of the requested regenerative braking amount may include increasing the requested regenerative braking amount as the rotational speed of the pedal increases.

The control method may further include determining a requested regenerative braking amount based on the rotational speed of the pedal when braking is determined, determining a maximum regenerative braking amount based on a current traveling environment of the electric bicycle, determining whether the requested regenerative braking amount is less than or equal to the maximum regenerative braking amount, controlling the motor so that braking is performed according to the requested regenerative braking amount when the requested regenerative braking amount is less than or equal to the maximum regenerative braking amount, and controlling the motor so that braking is performed according to the maximum regenerative braking amount when the requested regenerative braking amount exceeds the maximum regenerative braking amount.

The control method may further include determining a target pedal torque based on the detected position of the pedal and the detected position of the motor when braking is determined and controlling a current of the generator so that a pedal torque according to the detected current of the generator reaches the determined target pedal torque.

According to the invention, the determining of traveling or braking includes determining braking when the current traveling direction and the rotational direction of the pedal are opposite and a regenerative braking command is input.

The determining of traveling or braking may include determining traveling when the current traveling direction is the same as the rotational direction of the pedal, or when the rotational speed of the motor is zero and the rotational speed of the pedal is not zero, and the control method may further include determining a target pedal torque based on a positional difference between the detected position of the pedal and the detected position of the motor when traveling is determined, determining a target motor acceleration according to the determined target pedal torque, and controlling a current of the motor so that an acceleration of the motor reaches the determined target motor acceleration.

The determining of the target motor acceleration may include increasing the determined target motor acceleration as the determined target pedal torque increases.

The determining of traveling or braking may include determining reverse traveling when the rotational speed of the motor is zero and the rotational direction of the pedal is a reverse direction and the rotational speed thereof is not zero.

The control method may further include determining a target pedal torque based on a position difference between the detected position of the pedal and the detected position of the motor during reverse traveling, controlling the current of the generator so that the pedal torque according to the detected current of the generator reaches the determined target pedal torque, determining a target motor acceleration according to the determined target pedal torque, and controlling the current of the motor so that the acceleration of the motor reaches the determined target motor acceleration.

The determining of traveling or braking may include determining reverse traveling when the rotational speed of the motor is zero and the rotational direction of the pedal is a reverse direction and the rotational speed thereof is not zero, and a reverse traveling command is input.

In accordance with a third aspect of the present invention, an electric bicycle includes a pedal provided to be rotated by a bicyclist, a generator configured to generate a voltage upon being driven by the pedal, a generator current sensor configured to detect a current output by the generator, a pedal position sensor configured to detect a position of the pedal, a motor mounted on at least one wheel of a front wheel or a rear wheel and configured to provide a rotational force to the at least one wheel, a motor position sensor configured to detect a position of the motor, a motor current sensor configured to detect a current of the motor, and a controller configured to control the currents of the generator and the motor, and the controller is configured to detect a rotational speed and a rotational direction of the motor based on the detected position of the motor, determine a current traveling direction based on the rotational direction of the motor, detect a rotational speed and a rotational direction of the pedal based on the detected position of the pedal, determine traveling or braking based on the current traveling direction and the rotational direction of the pedal, and control the motor so that regenerative braking is performed when braking is determined.

The controller is configured to determine braking when the current traveling direction and the rotational direction of the pedal are opposite.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a perspective view of an electric bicycle to which a system for driving an electric bicycle (electric bicycle driving system) in accordance with one embodiment of the present invention is applied;
FIG. 2 is a control block diagram of the electric bicycle driving system in accordance with one embodiment of the present invention;
FIGS. 3 to 6 are control flowcharts of the electric bicycle driving system in accordance with one embodiment of the present invention;
FIG. 7 is a control flowchart of the electric bicycle driving system in accordance with another embodiment of the present invention;
FIG. 8 is a control flowchart of the electric bicycle driving system in accordance with still another embodiment of the present invention; and
FIG. 9 is a control flowchart of the electric bicycle driving system in accordance with yet another embodiment of the present invention.

### DETAILED DESCRIPTION

Like reference numerals refer to like elements throughout the specification. Not all elements of embodiments will be described in the specification, and general information in the technical field to which the present invention pertains or overlapping information between the embodiments will be omitted. The terms "part," "module," "member," or "block" as used throughout the specification may be implemented in software or hardware, and a plurality of "parts," "modules," "members," or "blocks" may be implemented in a single component, or a single "part," "module," "member," or "block" may include a plurality of components.

It will be understood that when a component is referred to as being "connected" to another component throughout the specification, it can be directly or indirectly connected to the other component. When a component is indirectly connected to another component, it may be connected to the other component through a wireless communication network.

In addition, when a part "includes" or "comprises" a component, unless described to the contrary, the term "includes" or "comprises" does not indicate that the part excludes another component but instead indicates that the part may further include the other component.

Terms such as first, second, etc., are used to distinguish one component from another component, and the components are not limited by the above-described terms.

Unless the context clearly indicates otherwise, the singular forms include the plural forms.

In each operation, identification codes are used for convenience of description but are not intended to illustrate the order of the operations, and each operation may be implemented in an order different from the illustrated order unless explicitly stated in the context.

Hereinafter, a working principle and embodiments of the present invention will be described with reference to the accompanying drawings.

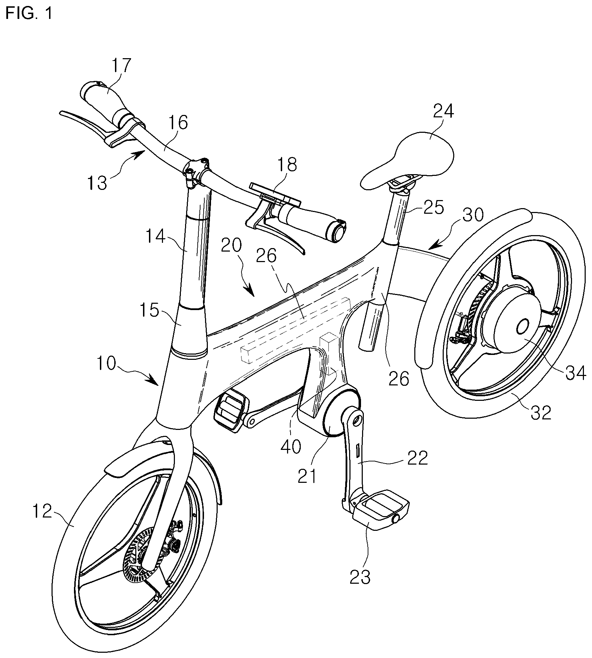

FIG. 1 is a perspective view of an electric bicycle to which a system for driving an electric bicycle (electric bicycle driving system) in accordance with one embodiment of the present invention is applied.

Referring to FIG. 1, an electric bicycle is a chainless electric bicycle without a chain, and may include a front frame 10, a middle frame 20, and a rear frame 30.

The front frame 10 may include a front wheel 12 and a handle stay 14 to which a handle portion 13 is connected.

The handle portion 13 may include a handle stem 15 coupled to a lower end of the handle stay 14, a handle bar 16 coupled to the handle stay 14, and hand grips 17 installed on the handle bar 16.

The front wheel 12 is rotatably coupled to one side of the lower end of the handle stay 14. The handle stem 15 is provided to adjust a height of the handle portion 13. The handle bar 16 is provided to determine the steering of the electric bicycle. An interface 18 is provided on the handle grip 17 to display a state of the electric bicycle to a bicyclist and transmit the bicyclist's request to a controller 40 through buttons or a display. The interface 18 is electrically connected to the controller 40 through a wired or wireless connection.

A generator 21 is provided at one end of the middle frame 20, and on both sides of the generator 21, pedals 23 are rotatably mounted by crank arms 22. One end of the crank arm 22 is rotatably coupled to a pedal shaft of the middle frame 20, and the other end thereof is rotatably coupled to the pedal 23. When the bicyclist rotates the pedal 23, a rotational force of the pedal 23 is converted into electrical energy by the generator 21, and the electrical energy of the generator 21 may be stored in a battery 26 provided in the middle frame 20. The battery 26 may apply a current to a motor 34 to operate the motor 34, thereby providing a rotational force to a rear wheel 32.

The middle frame 20 may further include a saddle tube 25 for installing a saddle 24. The saddle tube 25 is coupled to a seat tube 27 protruding from the rear of the middle frame 20 to be adjustable in height.

The rear wheel 32 is rotatably mounted on one side of an end of the rear frame 30. The motor 34 is mounted at a center of the rear wheel 32 to rotate the rear wheel 32 to move the electric bicycle forward. The motor 34 may include a gear shift so that the bicyclist may change a rotational speed of the rear wheel 32 using the interface 18 or a throttle.

FIG. 1 illustrates an embodiment of the electric bicycle including one front wheel 12 and one rear wheel 32, but in accordance with another embodiment of the present invention, the electric bicycle may be configured to include two or more front wheels 12 and/or two or more rear wheels 32. In the embodiment in which the electric bicycle includes two or more rear wheels 32, one motor 34 may simultaneously change the rotational speed of two or more rear wheels 32, or two or more motors 34 may change the rotational speed of two or more rear wheels 32, respectively. In still another embodiment, two or more motors 34 may change the rotational speeds of the front wheels 12 and the rear wheels 32, respectively. In the case of the embodiments in which the electric bicycle includes two or more motors 34, controlling the motors 34 may include controlling each of the two or more motors 34, and detecting rotational positions of the motors 34 may include detecting a rotational position of each of two or more motors 34.

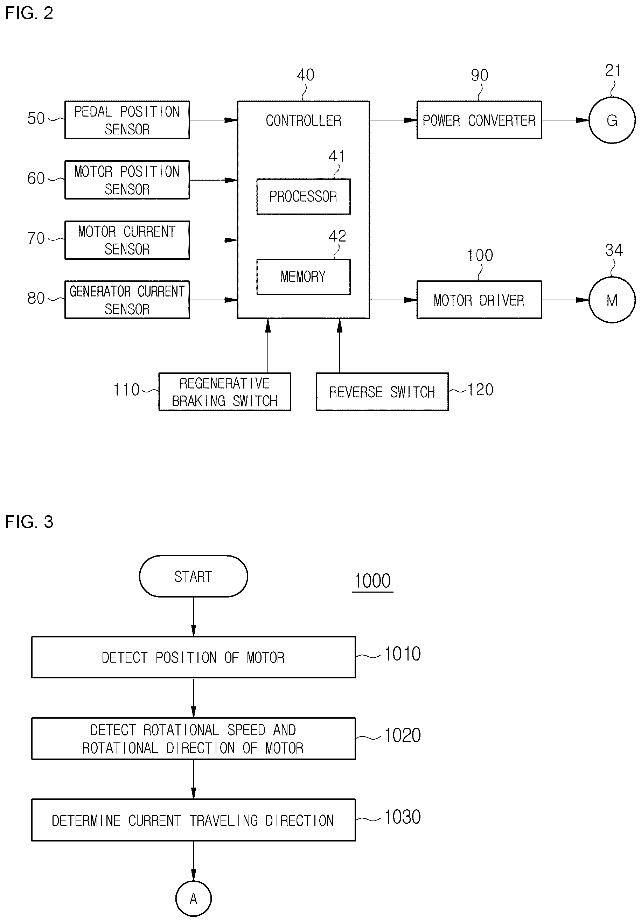

FIG. 2 is a control block diagram of the electric bicycle driving system in accordance with one embodiment of the present invention.

Referring to FIG. 2, the electric bicycle driving system includes the controller 40 that performs overall control.

At an input side of the controller 40, a pedal position sensor 50, a motor position sensor 60, a motor current sensor 70, a generator current sensor 80, and a regenerative braking switch 110 are electrically connected.

The pedal position sensor 50 detects a rotational position of the pedal 23.

The pedal position sensor 50 may be a position sensor that detects a position of a rotor of the generator 21. Since the pedal 23 and the generator 21 are connected, the position of the pedal 23 may be detected from the position of the rotor of the generator 21. A pedal position signal detected by the pedal position sensor 50 may be transmitted to the controller 40.

The motor position sensor 60 detects a rotational position of the motor 34. The motor position sensor 60 may be a position sensor that detects a position of a rotor of the motor 34. A motor position signal detected by the motor position sensor 60 may be transmitted to the controller 40. In this case, since the motor 34 and a driving wheel are mechanically connected, the position of the motor may represent a rotational position of the driving wheel.

The motor current sensor 70 detects a current supplied to the motor 34. A motor current signal detected by the motor current sensor 70 may be transmitted to the controller 40.

The generator current sensor 80 detects a current output by the generator 21. The generator current sensor 80 may detect a phase current of the generator 21. A generator current signal detected by the generator current sensor 80 may be transmitted to the controller 40.

The regenerative braking switch 110 may be a switch for receiving an input representing the bicyclist's willingness to perform an operation for regenerative braking and may be implemented through the interface 18 provided on the handle grip 17 or provided as a separate switch. Alternatively, the regenerative braking switch 110 may be provided integrally with a brake lever and operated simultaneously when the bicyclist operates the brake lever for braking.

The regenerative braking switch 110 is provided to be turned on or off by the bicyclist. When turned on, the regenerative braking switch 110 may output a regenerative braking command.

A reverse switch 120 may be a switch for receiving an input representing the bicyclist's willingness to operate the electric bicycle for reverse traveling and may be implemented through the interface 18 provided on the handle grip 17 or provided as a separate switch.

The reverse switch 120 is provided to be turned on or off by the bicyclist.

On an output side of the controller 40, a power converter 90 and a motor driver 100 are electrically connected.

The power converter 90 may drive the generator 21. The power converter 90 may convert an AC voltage generated by the generator 21 into a DC voltage for charging the battery 26. The power converter 90 may drive the generator 21 according to a control signal from the controller 40.

The motor driver 100 may drive the motor 34. The motor driver 100 may drive the motor 34 according to a control signal from the controller 40.

During regenerative braking, the motor 34 may be operated as a generator to apply a braking moment to the at least one wheel, wherein the motor 34 converts rotational motion of the wheel into electrical energy that may be stored in the battery 32.

The controller 40 detects a rotational speed and a rotational direction of the motor based on the detected position of the motor. The controller 40 may determine the rotational speed and the rotational direction of the motor from a change in the position of the motor detected through the motor position sensor 60.

The controller 40 determines a current traveling direction based on the rotational direction of the motor. Since the motor 34 is connected to the driving wheel and rotates together, a traveling direction of the electric bicycle is determined according to the rotational direction of the motor.

The controller 40 detects a rotational speed and a rotational direction of the pedal based on the detected position of the pedal. The controller 40 may determine the rotational speed and the rotational direction of the pedal from a change in the position of the pedal detected through the pedal position sensor 50.

The controller 40 determines traveling or braking based on the current traveling direction and the rotational direction of the pedal.

The controller 40 determines braking when the current traveling direction and the rotational direction of the pedal are opposite. In a normal traveling situation, the bicyclist rotates the pedal in the same direction as the traveling direction of the electric bicycle, or keeps the pedal stationary. The controller 40 determines that the bicyclist has a willingness to brake when the traveling direction of the electric bicycle and the rotational direction of the pedal are opposite.

For example, when the bicyclist rotates the pedal in the reverse direction while the electric bicycle is traveling forward, the controller 40 may determine that the bicyclist has the willingness to brake. Conversely, when the bicyclist rotates the pedal in a forward direction while the electric bicycle is traveling backward, the controller 40 may determine that the bicyclist has the willingness to brake.

Specifically, the controller 40 determines braking when the current traveling direction and the rotational direction of the pedal are opposite and a regenerative braking command is input.

The controller 40 determines traveling when the regenerative braking command is not input, even when the current traveling direction and the rotational direction of the pedal are opposite. The regenerative braking command may be, for example, an on signal of the regenerative braking switch 110.

The controller 40 may determine braking only when the regenerative braking command is input and control regenerative braking to be performed. For example, when performing regenerative braking, the bicyclist may turn on the regenerative braking switch 110 integrally provided with the brake lever while rotating the pedal 23 in a direction opposite to the traveling direction so that the controller 40 performs regenerative braking.

Alternatively, the bicyclist may set the regenerative braking switch 110 provided through the interface 18 to on in advance and rotate the pedal 23 in the direction opposite to the traveling direction while traveling so that the controller 40 performs regenerative braking.

The controller 40 may determine traveling when the current traveling direction is the same as the rotational direction of the pedal, or when the rotational speed of the motor is zero and the rotational speed of the pedal is not zero. That is, the controller 40 may determine braking when the current traveling direction and the rotational direction of the pedal are opposite, determine stoppage when both the rotational speed of the motor and the rotational speed of the pedal are zero, and determine traveling in other cases.

For example, the controller 40 may recognize a situation in which the electric bicycle starts forward traveling while stopped and determine forward traveling when the rotational speed of the motor is zero and the rotational direction of the pedal is a forward direction and the rotational speed thereof is not zero, and may recognize a situation in which the electric bicycle starts reverse traveling while stopped and determine reverse traveling when the rotational speed of the motor is zero and the rotational direction of the pedal is the reverse direction and the rotational speed thereof is not zero.

The controller 40 may determine stoppage when a reverse command is not input, even when the rotational speed of the motor is zero and the rotational direction of the pedal is the reverse direction and the rotational speed thereof is not zero. The reverse command may be, for example, an on signal of the reverse switch 120.

The controller 40 may determine reverse traveling only when the reverse command is input and control the motor to rotate in the reverse direction. For example, when the bicyclist intends to drive the electric bicycle in reverse while the electric bicycle is stopped, the bicyclist may turn on the reverse switch 120 while rotating the pedal 23 in the reverse direction so that the controller 40 performs reverse traveling.

The controller 40 controls the motor so that regenerative braking is performed when braking is determined. The controller 40 may provide a control signal to the motor driver 100 to control the motor. The motor driver 100 may turn on and off the switches of an inverter and a converter provided to control the motor 34.

The controller 40 may determine a requested regenerative braking amount based on the rotational speed of the pedal when braking is determined. The requested regenerative braking amount may be a braking amount preset to correspond to the rotational speed of the pedal. The requested regenerative braking amount may be preset to increase as the rotational speed of the pedal increases and decrease as the rotational speed of the pedal decreases.

The controller 40 may control the motor 34 to perform braking according to the requested regenerative braking amount. The controller 40 may control the motor driver 100 to perform regenerative braking through the motor 34.

Meanwhile, the controller 40 may determine a maximum regenerative braking amount based on a current traveling environment of the electric bicycle. The controller 40 may receive traveling environment information including state information about the motor 34 and the battery 26 to determine the maximum regenerative braking amount.

The controller 40 may determine whether the requested regenerative braking amount is less than or equal to the maximum regenerative braking amount. The controller 40 may control the motor so that braking is performed according to the requested regenerative braking amount when the requested regenerative braking amount is less than or equal to the maximum regenerative braking amount, and may control the motor so that braking is performed according to the maximum regenerative braking amount when the requested regenerative braking amount exceeds the maximum regenerative braking amount. The controller 40 may control the motor driver 100 to perform regenerative braking through the motor 34.

The controller 40 may determine a target pedal torque based on the detected position of the pedal and the detected position of the motor when braking is determined. The target pedal torque may be a torque preset to correspond to the rotational speed of the pedal according to the position of the pedal and the rotational speed of the motor according to the position of the motor. Alternatively, the target pedal torque may be a torque preset to a constant value when braking is determined.

The controller 40 may determine a pedal torque according to the current of the generator 21. The pedal torque may be a torque preset to correspond to the current of the generator 21.

The controller 40 may cause the pedal torque according to the current of the generator 21 to reach the target pedal torque by controlling the current of the generator 21.

In order to cause the pedal torque to reach the target pedal torque, the controller 40 may maintain or adjust the current of the generator 21 so that the current of the generator detected through the generator current sensor 80 reaches a target current corresponding to the target pedal torque.

Accordingly, the controller 40 may provide an appropriate pedal feeling while regenerative braking is performed when braking is determined. When braking is determined, the pedal feeling may become heavier as the regenerative braking force becomes stronger, and the pedal feeling may become lighter as the regenerative braking force becomes weaker, and alternatively, in another embodiment, when braking is determined, the pedal feeling may be maintained constant.

Meanwhile, the controller 40 may recognize a position difference between the position of the pedal 23 and the position of the motor 34.

The controller 40 may determine the target pedal torque based on the position difference between the position of the pedal and the position of the motor when traveling is determined. The target pedal torque may be a torque preset to correspond to the position difference between the position of the pedal and the position of the motor.

The controller 40 may determine the pedal torque according to the current of the generator 21. The pedal torque may be a torque preset to correspond to the current of the generator 21.

The controller 40 may cause the pedal torque according to the current of the generator 21 to reach the target pedal torque by controlling the current of the generator 21.

In order to cause the pedal torque to reach the target pedal torque, the controller 40 may maintain or adjust the current of the generator 21 so that the current of the generator detected through the generator current sensor 80 reaches a target current corresponding to the target pedal torque.

Therefore, the controller 40 may provide a pedaling feeling as if the chain actually exists in the chainless electric bicycle when traveling is determined. When the motor 34 does not rotate to a position of the pedal that rotates as if the chain is actually hanging, the pedaling feeling may become heavy, and when the motor 34 rotates to or beyond the position of the pedal, the pedaling feeling may become light.

The controller 40 may determine a target motor acceleration according to the target pedal torque. The target motor acceleration may be a speed preset to correspond to the target pedal torque. The target motor acceleration may be preset to increase as the target pedal torque increases and decrease as the target pedal torque decreases.

The controller 40 may cause an acceleration of the motor 34 to reach the target motor acceleration by controlling the current of the motor 34. The controller 40 may detect the acceleration of the motor 34. In this case, the controller 40 may determine the speed of the motor from a change in the rotational position of the motor detected through the motor position sensor 60, and determine the motor acceleration from a change in the speed of the motor.

In order for the acceleration of the motor to reach the target motor acceleration, the controller 40 may maintain or adjust the current of the motor 34 so that the current of the motor detected through the motor current sensor 70 reaches a target motor current corresponding to the target motor acceleration.

Therefore, it is possible to provide a traveling feeling as if the chain actually exists in the chainless electric bicycle. The position of the motor 34 may follow the position of the pedal 23 that rotates as if the chain is actually hanging.

As such, one embodiment of the present invention may more effectively improve the pedaling feeling and traveling feeling as if the chain actually exists in the electric bicycle.

The controller 40 may include a plurality of semiconductor devices and may be called variously, such as an electronic control unit (ECU). The controller 40 may include a memory 42 and a processor 41. The memory 42 and the processor 41 may be implemented as separate semiconductor devices or as a single semiconductor device. The controller 40 may include a plurality of processors and/or a plurality of memories.

The memory 42 may memorize/store programs and data for controlling currents of the motor and the generator. For example, the memory 42 may memorize/store programs and data for detecting the rotational speed of the pedal, the rotational direction of the pedal, the rotational speed of the motor, and the rotational direction of the motor based on the position of the pedal and the position of the motor, determining the current traveling direction based on the rotational direction of the motor, determining traveling or braking based on the current traveling direction and the rotational direction of the pedal, and controlling the currents of the generator and the motor when traveling is determined. In addition, the memory 42 may memorize/store programs and data for controlling the inverter and the converter connected to the motor so that regenerative braking is performed through the motor when braking is determined.

The memory 42 may provide programs and data to the processor 41 and store temporary data generated during an arithmetic operation of the processor 41.

The memory 42 may include a volatile memory such as a static random access memory (S-RAM), a dynamic random access memory (D-RAM), or a nonvolatile memory such as a read only memory (ROM), an erasable programmable read only memory (EPROM), or a flash memory. The memory 42 may include one semiconductor device or a plurality of semiconductor devices.

The processor 41 may provide control signals to the power converter 90 and the motor driver 100 according to programs and data provided from the memory 42. For example, the processor 41 may provide a regenerative braking signal to the motor driver 100 according to operation of the pedal in a direction opposite of traveling according to the bicyclist's willingness to brake, and may determine the target pedal torque based on the position of the pedal and the detected position of the motor and provide a control signal to the power converter 90 to control the current of the generator so that the pedal torque according to the detected current of the generator reaches the determined target pedal torque.

The processor 41 may include an arithmetic circuit, a memory circuit, and a control circuit. The processor 41 may include one semiconductor device or a plurality of semiconductors. Further, the processor 41 may include one core or a plurality of cores in one semiconductor device. This processor 41 may be called variously, such as a micro processing unit (MPU).

FIGS. 3 to 6 are control flowcharts of the electric bicycle driving system in accordance with one embodiment of the present invention.

Referring to FIG. 3, in a control method 1000 for the electric bicycle driving system in accordance with one embodiment of the present invention, the controller 40 may detect a position of the motor 34 through the motor position sensor 60 (1010).

The controller 40 detects a rotational speed and a rotational direction of the motor based on the detected position of the motor (1020). The controller 40 may determine the rotational speed and the rotational direction of the motor from a change in the position of the motor detected through the motor position sensor 60.

The controller 40 determines a current traveling direction based on the rotational direction of the motor (1030).

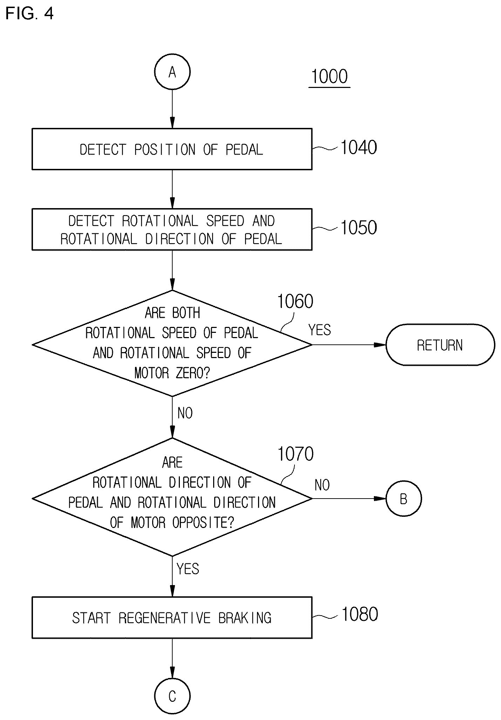

Meanwhile, referring to FIG. 4, the controller 40 detects a position of the pedal 23 through the pedal position sensor 50 (1040). The method according to the flowchart shown in FIG. 4 is not covered by the claimed invention, however, is useful for understanding the present invention.

The controller 40 detects a rotational speed and a rotational direction of the pedal based on the detected position of the pedal (1050). The controller 40 may determine the rotational speed and the rotational direction of the pedal from a change in the position of the pedal detected through the pedal position sensor 50.

The controller 40 determines traveling or braking based on the current traveling direction and the rotational direction of the pedal.

Specifically, the controller 40 determines whether both the rotational speed of the motor and the rotational speed of the pedal are zero (1060), and when both the rotational speed of the motor and the rotational speed of the pedal are zero (Yes in 1060), the controller 40 determines that the electric bicycle is in a stationary state.

When either of the rotational speed of the motor and the rotational speed of the pedal is not zero (No in 1060), the controller 40 determines whether a current traveling direction, that is, the rotational direction of the motor and the rotational direction of the pedal are opposite (1070).

When the rotational direction of the motor and the rotational direction of the pedal are not opposite (No in 1070), the controller 40 determines traveling (B).

On the other hand, when the rotational direction of the motor and the rotational direction of the pedal are opposite (Yes in 1070), the controller 40 determines braking and starts regenerative braking (1080) (C).

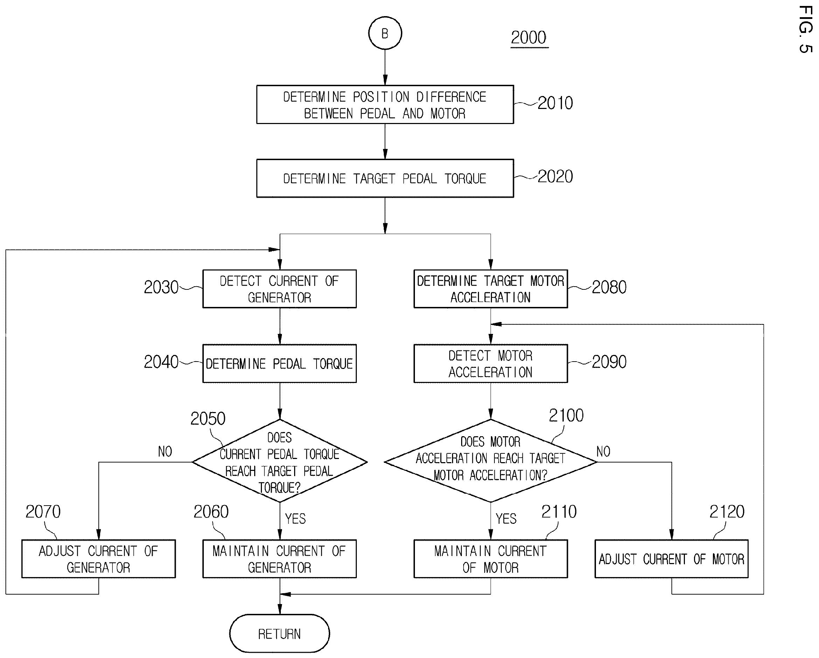

Referring to FIG. 5, a control method 2000 of the electric bicycle driving system when traveling is determined (B) may be confirmed.

Referring to FIG. 5, the controller 40 may determine a position difference between the detected position of the pedal and the detected position of the motor when traveling is determined (2010).

The controller 40 may determine a target pedal torque based on the position difference between the position of the pedal and the position of the motor (2020). The target pedal torque may be a torque preset to correspond to the position difference between the position of the pedal and the position of the motor.

The controller 40 may detect a current of the generator 21 through the generator current sensor 80 (2030).

The controller 40 may determine a pedal torque according to the current of the generator (2040). The pedal torque may be a torque preset to correspond to the current of the generator 21.

The controller 40 may determine whether the current pedal torque reaches the target pedal torque (2050).

When the current pedal torque reaches the target pedal torque as a result of the determination (Yes in 2050), the controller 40 maintains the current generator current (2060).

On the other hand, when the current pedal torque does not reach the target pedal torque as the result of the determination (No in 2050), the controller 40 may adjust the current generator current (2070). Then, the method may proceed to operation 2030 to perform the following operations.

Meanwhile, after determining the target pedal torque (2020), the controller 40 may determine a target motor acceleration according to the target pedal torque (2080). The target motor acceleration may be a speed preset to correspond to the target pedal torque.

The controller 40 may detect a motor acceleration based on the rotational position of the motor 34 detected through the motor position sensor 60 (2090). The controller 40 may determine the speed of the motor from a change in the rotational position of the motor detected through the motor position sensor 60, and determine the motor acceleration from the speed of the motor.

The controller 40 may determine whether the current motor acceleration reaches the target motor acceleration (2100).

When the current motor acceleration reaches the target motor acceleration as a result of the determination (Yes in 2100), the controller 40 maintains the current motor current (2110).

On the other hand, when the current motor acceleration does not reach the target motor acceleration as the result of the determination (No in 2100), the controller 40 may adjust the current motor current (2120). Then, the method may proceed to operation 2090 to perform the following operations.

As such, one embodiment of the present invention may more effectively improve the pedaling feeling and traveling feeling as if the chain actually exists in the electric bicycle.

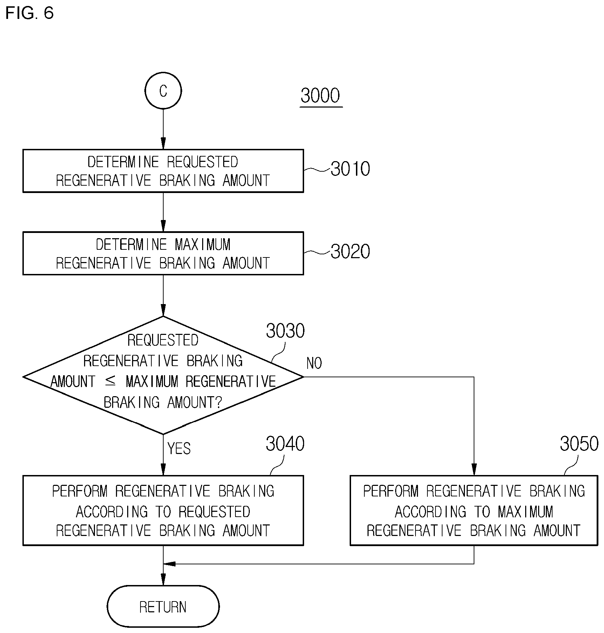

Referring to FIG. 6, a control method 3000 of the electric bicycle driving system when braking is determined (C) may be confirmed.

The controller 40 may determine a requested regenerative braking amount based on the rotational speed of the pedal when braking is determined (3010). The requested regenerative braking amount may be a braking amount preset to correspond to the rotational speed of the pedal.

The controller 40 may determine a maximum regenerative braking amount based on a current traveling environment of the electric bicycle (3020). The controller 40 may receive traveling environment information including state information about the motor 34 and the battery 26 to determine the maximum regenerative braking amount.

The controller 40 may determine whether the requested regenerative braking amount is less than or equal to the maximum regenerative braking amount (3030).

When the requested regenerative braking amount is less than or equal to the maximum regenerative braking amount as a result of the determination (Yes in 3030), the controller 40 may control the motor so that braking is performed according to the requested regenerative braking amount (3040).

On the other hand, when the requested regenerative braking amount exceeds the maximum regenerative braking amount as the result of the determination (No in 3030), the controller 40 may control the motor so that braking is performed according to the maximum regenerative braking amount (3050).

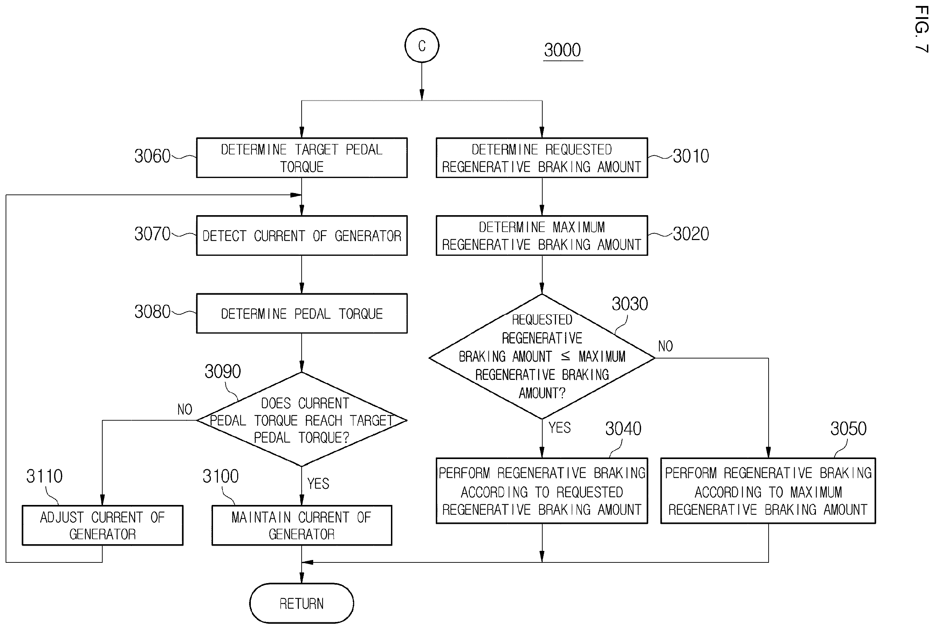

FIG. 7 is a control flowchart of the electric bicycle driving system in accordance with another embodiment of the present invention.

Referring to FIG. 7, a control method 3000 of the electric bicycle driving system when braking is determined (C) in the embodiment different from that of FIG. 6 may be confirmed.

The controller 40 may determine a requested regenerative braking amount based on the rotational speed of the pedal when braking is determined (3010). The requested regenerative braking amount may be a braking amount preset to correspond to the rotational speed of the pedal.

The controller 40 may determine a maximum regenerative braking amount based on a current traveling environment of the electric bicycle (3020). The controller 40 may receive traveling environment information including state information about the motor 34 and the battery 26 to determine the maximum regenerative braking amount.

The controller 40 may determine whether the requested regenerative braking amount is less than or equal to the maximum regenerative braking amount (3030).

When the requested regenerative braking amount is less than or equal to the maximum regenerative braking amount as a result of the determination (Yes in 3030), the controller 40 may control the motor so that braking is performed according to the requested regenerative braking amount (3040).

On the other hand, when the requested regenerative braking amount exceeds the maximum regenerative braking amount as the result of the determination (No in 3030), the controller 40 may control the motor so that braking is performed according to the maximum regenerative braking amount (3050).

At the same time, the controller 40 may determine a target pedal torque based on the detected position of the pedal and the detected position of the motor when braking is determined (3060). The target pedal torque may be a torque preset to correspond to the rotational speed of the pedal according to the position of the pedal and the rotational speed of the motor according to the position of the motor. Alternatively, the target pedal torque may be a torque preset to a constant value when braking is determined.

The controller 40 may detect a current of the generator 21 through the generator current sensor 80 (3070).

The controller 40 may determine a pedal torque according to the current of the generator (3080). The pedal torque may be a torque preset to correspond to the current of the generator 21.

The controller 40 may determine whether the current pedal torque reaches the target pedal torque (3090).

When the current pedal torque reaches the target pedal torque as a result of the determination (Yes in 3090), the controller 40 maintains the current generator current (3100).

On the other hand, when the current pedal torque does not reach the target pedal torque as the result of the determination (No in 3090), the controller 40 may adjust the current generator current (3110). Then, the method may proceed to operation 3070 to perform the following operations.

As such, in one embodiment of the present invention, an appropriate pedal feeling during regenerative braking of the electric bicycle may be provided so that the bicyclist easily performs braking control.

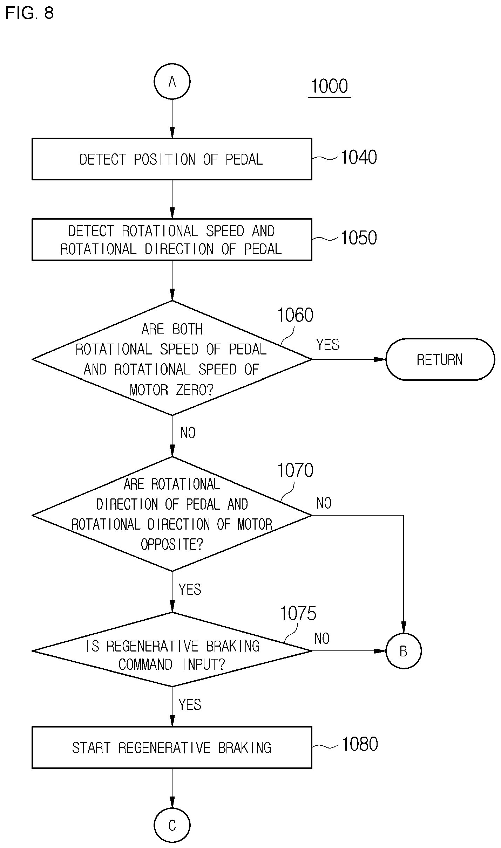

FIG. 8 is a control flowchart of the electric bicycle driving system in accordance with still another embodiment of the present invention.

FIG. 8 illustrates a method 1000 for determining traveling or braking in an embodiment different from that of FIG. 4.

Referring to FIG. 8, the controller 40 detects a position of the pedal 23 through the pedal position sensor 50 (1040).

The controller 40 detects a rotational speed and a rotational direction of the pedal based on the detected position of the pedal (1050). The controller 40 may determine the rotational speed and the rotational direction of the pedal from a change in the position of the pedal detected through the pedal position sensor 50.

The controller 40 determines traveling or braking based on the current traveling direction and the rotational direction of the pedal.

Specifically, the controller 40 determines whether both the rotational speed of the motor and the rotational speed of the pedal are zero (1060), and when both the rotational speed of the motor and the rotational speed of the pedal are zero (Yes in 1060), the controller 40 determines that the electric bicycle is in a stationary state.

When either of the rotational speed of the motor and the rotational speed of the pedal is not zero (No in 1060), the controller 40 determines whether a current traveling direction, that is, the rotational direction of the motor and the rotational direction of the pedal are opposite (1070).

When the rotational direction of the motor and the rotational direction of the pedal are not opposite (No in 1070), the controller 40 determines traveling (B).

On the other hand, when the rotational direction of the motor and the rotational direction of the pedal are opposite (YES in 1070), the controller 40 determines whether a regenerative braking command is input (1075).

When the regenerative braking command is not input even when the rotational direction of the motor and the rotational direction of the pedal are opposite (No in 1075), the controller 40 determines traveling (B) and performs control such that regenerative braking is not performed.

On the other hand, when the rotational direction of the motor and the rotational direction of the pedal are opposite and the regenerative braking command is input (Yes in 1075), the controller 40 determines braking and starts regenerative braking (1080) ^{©}.

By checking whether the regenerative braking command is input in this way, it is possible to confirm the bicyclist's willingness to brake and prevent unintended regenerative braking from being performed.

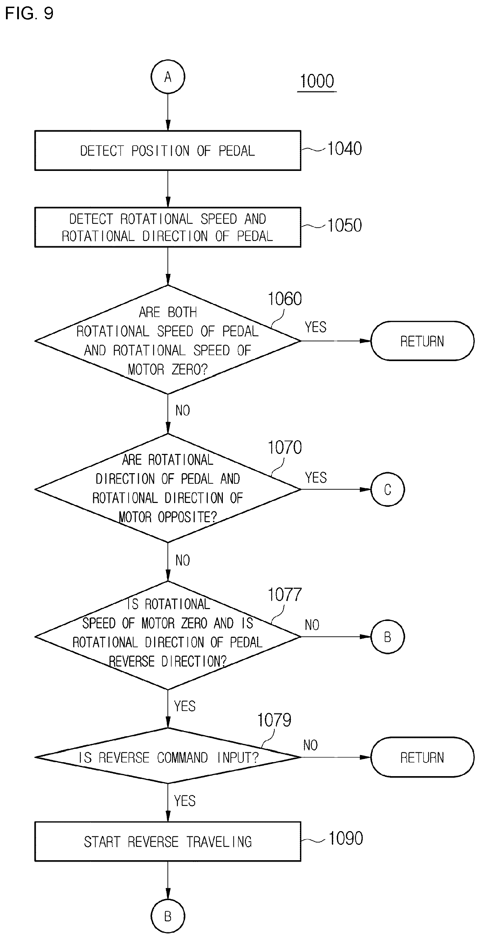

FIG. 9 is a control flowchart of the electric bicycle driving system in accordance with yet another embodiment of the present invention.

FIG. 9 illustrates a method 1000 for determining traveling or braking in an embodiment different from those of FIGS. 4 and 8.

Referring to FIG. 9, the controller 40 may detect a position of the pedal 23 through the pedal position sensor 50 (1040).

The controller 40 may detect a rotational speed and a rotational direction of the pedal based on the detected position of the pedal (1050). The controller 40 may determine the rotational speed and the rotational direction of the pedal from a change in the position of the pedal detected through the pedal position sensor 50.

The controller 40 may determine traveling or braking based on the current traveling direction and the rotational direction of the pedal.

Specifically, the controller 40 determines whether both the rotational speed of the motor and the rotational speed of the pedal are zero (1060), and when both the rotational speed of the motor and the rotational speed of the pedal are zero (Yes in 1060), the controller 40 determines that the electric bicycle is in a stationary state.

When either of the rotational speed of the motor and the rotational speed of the pedal is not zero (No in 1060), the controller 40 determines whether a current traveling direction, that is, the rotational direction of the motor and the rotational direction of the pedal are opposite (1070).

When the rotational direction of the motor and the rotational direction of the pedal are opposite (Yes in 1070), the controller 40 determines braking ^{©}.

On the other hand, when the rotational direction of the motor and the rotational direction of the pedal are not opposite (No in 1070), the controller 40 determines whether the rotational speed of the motor is zero and the rotational direction of the pedal is a reverse direction and the rotational speed thereof is not zero (1077).

When the rotational speed of the motor is zero and the rotational direction of the pedal is the reverse direction and the rotational speed thereof is not zero (No in 1077), the controller 40 determines traveling (B). This case may include a case where the rotational direction of the pedal is a forward direction during forward traveling, a case where the rotational direction of the pedal is a backward direction during reverse traveling, or a case where the rotational direction of the pedal is the forward direction while the electric bicycle is stopped.

On the other hand, when the rotational speed of the motor is zero and the rotational direction of the pedal is the reverse direction and the rotational speed thereof is not zero (Yes in 1077), the controller 40 may check whether a reverse command is input (1079).

When the reverse command is not input even when the rotational speed of the motor is zero and the rotational direction of the pedal is the reverse direction and the rotational speed thereof is not zero (No in 1079), the controller 40 determines stoppage and performs control such that reverse traveling is not performed.

On the other hand, when the rotational speed of the motor is zero and the rotational direction of the pedal is the reverse direction and the rotational speed thereof is not zero, and the reverse command is input (Yes in 1079), the controller 40 determines reverse traveling and start reverse traveling (1090) (B).

By checking whether or not the reverse command is input in this way, it is possible to confirm the bicyclist's willingness to travel in reverse and prevent unintentional reverse traveling.

As is apparent from the above description, an electric bicycle, a system for driving the electric bicycle, and a control method thereof in accordance with one embodiment of the present invention can perform control so that regenerative braking of the electric bicycle is easily performed through a pedal operation of a bicyclist.

An electric bicycle, a system for driving the electric bicycle, and a control method thereof in accordance with one embodiment of the present invention can control an amount of regenerative braking according to speed of a pedal so that a bicyclist easily controls a degree of braking.

An electric bicycle, a system for driving the electric bicycle, and a control method thereof in accordance with one embodiment of the present invention can prevent braking not intended by a bicyclist by checking whether or not regenerative braking is performed according to an additional operation.

As above, the disclosed exemplary embodiments have been described with reference to the accompanying drawings. It will be understood by those skilled in the art that various changes in form and details may be made therein without departing from the scope of the invention as defined by the appended claims. The disclosed embodiments are illustrative and should not be construed as limiting.

## Claims

1. A system for driving an electric bicycle, the system comprising:
a generator (21) configured to generate a voltage by converting a rotational motion of a pedal (23) of the electric bicycle into electrical energy;
a generator current sensor (80) configured to detect a current output by the generator (21);
a pedal position sensor (50) configured to detect a position of the pedal (23);
a motor (34) configured to be mounted on at least one wheel of a front wheel (12) or a rear wheel (32) and configured to provide a rotational force to the at least one wheel;
a motor position sensor (60) configured to detect a position of the motor (34);
a motor current sensor (70) configured to detect a current of the motor (34); and
a controller (40) configured to control the currents of the generator (21) and the motor (34),
wherein the controller (40) is configured to
- detect a rotational speed and a rotational direction of the motor (34) based on the detected position of the motor (34),
- determine a current traveling direction based on the rotational direction of the motor (34),
- detect a rotational speed and a rotational direction of the pedal (23) based on the detected position of the pedal (23),
- determine traveling or braking based on the current traveling direction and the rotational direction of the pedal (23), wherein the controller (40) is configured to determine braking when the current traveling direction and the rotational direction of the pedal (23) are opposite and a regenerative braking command is input, and
- control the motor (34) so that regenerative braking is performed when braking is determined.

2. The system according to claim 1, wherein the controller (40) is configured to:
determine a requested regenerative braking amount based on the rotational speed of the pedal (23) when braking is determined and control the motor (34) so that braking is performed according to the requested regenerative braking amount; and
increase the requested regenerative braking amount as the rotational speed of the pedal (23) increases.

3. The system according to claim 1 or 2, wherein the controller (40) is configured to determine a requested regenerative braking amount based on the rotational speed of the pedal (23) when braking is determined, determine a maximum regenerative braking amount based on a current traveling environment of the electric bicycle, determine whether the requested regenerative braking amount is less than or equal to the maximum regenerative braking amount, control the motor (34) to perform braking according to the requested regenerative braking amount when the requested regenerative braking amount is less than or equal to the maximum regenerative braking amount, and control the motor (34) to perform braking according to the maximum regenerative braking amount when the requested regenerative braking amount exceeds the maximum regenerative braking amount.

4. The system according to any one of the preceding claims, wherein the controller (40) is configured to determine a target pedal torque based on the detected position of the pedal (23) and the detected position of the motor (34) when braking is determined and control the current of the generator (21) so that a pedal torque according to the detected current of the generator (21) reaches the determined target pedal torque.

5. The system according to any one of the preceding claims, wherein the controller (40) is configured to:
determine traveling when the current traveling direction is the same as the rotational direction of the pedal (23), or when the rotational speed of the motor (34) is zero and the rotational speed of the pedal (23) is not zero; and
determine a target pedal torque based on a position difference between the detected position of the pedal (23) and the detected position of the motor (34) when traveling is determined, determine a target motor acceleration according to the determined target pedal torque, and control the current of the motor (34) so that an acceleration of the motor (34) reaches the determined target motor acceleration.

6. The system according to any one of the preceding claims, wherein the controller (40) is configured to determine reverse traveling when the rotational speed of the motor (34) is zero and the rotational direction of the pedal (23) is a reverse direction and the rotational speed thereof is not zero.

7. A control method of a system for driving an electric bicycle including a generator (21) configured to generate a voltage by converting a rotational motion of a pedal into electrical energy, and a motor mounted on at least one wheel of a front wheel (12) or a rear wheel (32) and configured to provide a rotational force to the at least one wheel, the control method comprising:
detecting a position of the pedal (23) through a pedal position sensor (50);
detecting a position of the motor (34) through a motor position sensor (60);
detecting, by a controller (40), a rotational speed and a rotational direction of the motor (34) based on the detected position of the motor (34);
determining, by the controller (40), a current traveling direction based on the rotational direction of the motor (34);
detecting, by the controller (40), a rotational speed and a rotational direction of the pedal (23) based on the detected position of the pedal (23);
determining, by the controller (40), traveling or braking based on the current traveling direction and the rotational direction of the pedal (23), wherein braking is determined when the current traveling direction and the rotational direction of the pedal (23) are opposite and a regenerative braking command is input; and
controlling, by the controller (40), the motor (34) so that regenerative braking is performed when braking is determined.

8. The control method according to claim 7, further comprising:
determining, by the controller (40), a requested regenerative braking amount based on the rotational speed of the pedal (23) when braking is determined; and
controlling, by the controller (40), the motor (34) so that braking is performed according to the requested regenerative braking amount,
wherein the determining of the requested regenerative braking amount includes increasing the requested regenerative braking amount as the rotational speed of the pedal (23) increases.

9. The control method according to claim 7 or 8, further comprising:
determining, by the controller (40), a requested regenerative braking amount based on the rotational speed of the pedal (23) when braking is determined;
determining, by the controller (40), a maximum regenerative braking amount based on a current traveling environment of the electric bicycle;
determining, by the controller (40), whether the requested regenerative braking amount is less than or equal to the maximum regenerative braking amount;
controlling, by the controller (40), the motor (34) so that braking is performed according to the requested regenerative braking amount when the requested regenerative braking amount is less than or equal to the maximum regenerative braking amount; and
controlling, by the controller (40), the motor (34) so that braking is performed according to the maximum regenerative braking amount when the requested regenerative braking amount exceeds the maximum regenerative braking amount.

10. The control method according to any one of claims 7 to 9, further comprising:
determining, by the controller (40), a target pedal torque based on the detected position of the pedal (23) and the detected position of the motor (34) when braking is determined; and
controlling, by the controller (40), a current of the generator (21) so that a pedal torque according to the detected current of the generator (21) reaches the determined target pedal torque.

11. The control method according to any one of claims 7 to 10, wherein determining of traveling or braking includes determining traveling when the current traveling direction is the same as the rotational direction of the pedal (23), or when the rotational speed of the motor (34) is zero and the rotational speed of the pedal (23) is not zero, and
the control method further comprises:
determining, by the controller (40), a target pedal torque based on a positional difference between the detected position of the pedal (23) and the detected position of the motor (34) when traveling is determined;
determining, by the controller (40), a target motor acceleration according to the determined target pedal torque; and
controlling, by the controller (40), a current of the motor (34) so that an acceleration of the motor (34) reaches the determined target motor acceleration.

12. An electric bicycle comprising:
a pedal (23) provided to be rotated by a bicyclist;
a rear wheel (32) and a front wheel (12); and
a system in accordance with any one of claims 1 to 6;
wherein the pedal (23) is coupled to the generator (21) to drive the generator (21); and
wherein the motor is mounted on at least one wheel of the front wheel (12) or the rear wheel (32) and configured to provide a rotational force to the at least one wheel.

## Patentansprüche

1. System zum Antrieb eines Elektrofahrrads, wobei das System umfasst:
einen Generator (21), der so konfiguriert ist, dass er eine Spannung erzeugt, indem er eine Drehbewegung eines Pedals (23) des Elektrofahrrads in elektrische Energie umwandelt;
einen Generatorstromsensor (80), der so konfiguriert ist, dass er einen von dem Generator (21) ausgegebenen Strom erfasst;
einen Pedalpositionssensor (50), der so konfiguriert ist, dass er eine Position des Pedals (23) erfasst;
einen Motor (34), der so konfiguriert ist, dass er an zumindest einem Rad, und zwar einem Vorderrad (12) oder einem Hinterrad (32), montiert werden kann, und so konfiguriert ist, dass er eine Drehkraft auf das zumindest eine Rad ausübt;
einen Motorpositionssensor (60), der so konfiguriert ist, dass er eine Position des Motors (34) erfasst;
einen Motorstromsensor (70), der so konfiguriert ist, dass er einen Strom des Motors (34) erfasst; und
eine Steuerung (40), die so konfiguriert ist, dass sie den Strom des Generators (21) und den Strom des Motors (34) steuert,
wobei die Steuerung (40) konfiguriert ist zum
Erfassen einer Drehzahl und einer Drehrichtung des Motors (34) basierend auf der erfassten Position des Motors (34),
Bestimmen einer aktuellen Fahrtrichtung basierend auf der Drehrichtung des Motors (34),
Erfassen einer Drehzahl und einer Drehrichtung des Pedals (23) basierend auf der erfassten Position des Pedals (23),
Bestimmen des Fahrens oder Bremsens basierend auf der aktuellen Fahrtrichtung und der Drehrichtung des Pedals (23), wobei die Steuerung (40) so konfiguriert ist, dass sie das Bremsen bestimmt, wenn die aktuelle Fahrtrichtung und die Drehrichtung des Pedals (23) entgegengesetzt sind und ein regenerativer Bremsbefehl eingegeben wird, und
Steuern des Motors (34), so dass ein regeneratives Bremsen durchgeführt wird, wenn das Bremsen bestimmt wird.

2. System nach Anspruch 1, wobei die Steuerung (40) konfiguriert ist zum:
Bestimmen eines angeforderten regenerativen Bremsbetrags basierend auf der Drehzahl des Pedals (23), wenn das Bremsen bestimmt wird, und Steuern des Motors (34), so dass das Bremsen entsprechend dem angeforderten regenerativen Bremsbetrag durchgeführt wird; und
Erhöhen des angeforderten regenerativen Bremsbetrags, wenn die Drehzahl des Pedals (23) zunimmt.

3. System nach Anspruch 1 oder 2, wobei die Steuerung (40) so konfiguriert ist, dass sie einen angeforderten regenerativen Bremsbetrag basierend auf der Drehzahl des Pedals (23) bestimmt, wenn das Bremsen bestimmt wird, einen maximalen regenerativen Bremsbetrag basierend auf einer aktuellen Fahrumgebung des Elektrofahrrads bestimmt, bestimmt, ob der angeforderte regenerative Bremsbetrag kleiner oder gleich dem maximalen regenerativen Bremsbetrag ist, den Motor (34) so steuert, dass er das Bremsen entsprechend dem angeforderten regenerativen Bremsbetrag durchführt, wenn der angeforderte regenerative Bremsbetrag kleiner oder gleich dem maximalen regenerativen Bremsbetrag ist, und den Motor (34) so steuert, dass er das Bremsen entsprechend dem maximalen regenerativen Bremsbetrag durchführt, wenn der angeforderte regenerative Bremsbetrag den maximalen regenerativen Bremsbetrag überschreitet.

4. System nach einem der vorhergehenden Ansprüche, wobei die Steuerung (40) so konfiguriert ist, dass sie ein Soll-Pedaldrehmoment basierend auf der erfassten Position des Pedals (23) und der erfassten Position des Motors (34) bestimmt, wenn das Bremsen bestimmt wird, und den Strom des Generators (21) so steuert, dass ein Pedaldrehmoment, das dem erfassten Strom des Generators (21) entspricht, das bestimmte Soll-Pedaldrehmoment erreicht.

5. System nach einem der vorhergehenden Ansprüche, wobei die Steuerung (40) konfiguriert ist zum:
Bestimmen des Fahrens, wenn die aktuelle Fahrtrichtung gleich der Drehrichtung des Pedals (23) ist oder wenn die Drehzahl des Motors (34) null ist und die Drehzahl des Pedals (23) nicht null ist; und
Bestimmen eines Soll-Pedalmoments basierend auf einer Positionsdifferenz zwischen der erfassten Position des Pedals (23) und der erfassten Position des Motors (34), wenn das Fahren bestimmt wird, Bestimmen einer Soll-Motorbeschleunigung entsprechend dem bestimmten Soll-Pedaldrehmoment und Steuern des Stroms des Motors (34), so dass eine Beschleunigung des Motors (34) die bestimmte Soll-Motorbeschleunigung erreicht.

6. System nach einem der vorhergehenden Ansprüche, wobei die Steuerung (40) so konfiguriert ist, dass sie das Rückwärtsfahren bestimmt, wenn die Drehzahl des Motors (34) null ist und die Drehrichtung des Pedals (23) eine Rückwärtsrichtung ist und dessen Drehzahl nicht null ist.

7. Steuerungsverfahren eines Systems zum Antrieb eines Elektrofahrrads, das einen Generator (21), der so konfiguriert ist, dass er durch Umwandeln einer Drehbewegung eines Pedals in elektrische Energie eine Spannung erzeugt, und einen Motor, der an zumindest einem Rad, und zwar einem Vorderrad (12) oder einem Hinterrad (32), montiert ist und so konfiguriert ist, dass er eine Drehkraft auf das zumindest eine Rad ausübt, beinhaltet, wobei das Steuerungsverfahren umfasst:
Erfassen einer Position des Pedals (23) durch einen Pedalpositionssensor (50);
Erfassen einer Position des Motors (34) durch einen Motorpositionssensor (60);
Erfassen einer Drehzahl und einer Drehrichtung des Motors (34) basierend auf der erfassten Position des Motors (34) durch eine Steuerung (40);
Bestimmen einer aktuellen Fahrtrichtung basierend auf der Drehrichtung des Motors (34) durch die Steuerung (40);
Erfassen einer Drehzahl und einer Drehrichtung des Pedals (23) basierend auf der erfassten Position des Pedals (23) durch die Steuerung (40);
Bestimmen des Fahrens oder Bremsens basierend auf der aktuellen Fahrtrichtung und der Drehrichtung des Pedals (23) durch die Steuerung (40), wobei das Bremsen bestimmt wird, wenn die aktuelle Fahrtrichtung und die Drehrichtung des Pedals (23) entgegengesetzt sind und ein Befehl für regeneratives Bremsen eingegeben wird; und
Steuern des Motors (34) durch die Steuerung (40), so dass ein regeneratives Bremsen durchgeführt wird, wenn das Bremsen bestimmt wird.

8. Steuerungsverfahren nach Anspruch 7, ferner umfassend:
Bestimmen eines angeforderten regenerativen Bremsbetrags basierend auf der Drehzahl des Pedals (23) durch die Steuerung (40), wenn das Bremsen bestimmt wird; und
Steuern des Motors (34) durch die Steuerung (40), so dass das Bremsen entsprechend dem angeforderten regenerativen Bremsbetrag durchgeführt wird,
wobei das Bestimmen des angeforderten regenerativen Bremsbetrags das Erhöhen des angeforderten regenerativen Bremsbetrags beinhaltet, wenn die Drehzahl des Pedals (23) zunimmt.

9. Steuerungsverfahren nach Anspruch 7 oder 8, ferner umfassend:
Bestimmen eines angeforderten regenerativen Bremsbetrags basierend auf der Drehzahl des Pedals (23) durch die Steuerung (40), wenn das Bremsen bestimmt wird;
Bestimmen eines maximalen regenerativen Bremsbetrags basierend auf einer aktuellen Fahrumgebung des Elektrofahrrads durch die Steuerung (40);
Bestimmen, ob der angeforderte regenerative Bremsbetrag kleiner oder gleich dem maximalen regenerativen Bremsbetrag ist, durch die Steuerung (40);
Steuern des Motors (34) durch die Steuerung (40), so dass das Bremsen entsprechend dem angeforderten regenerativen Bremsbetrag durchgeführt wird, wenn der angeforderte regenerative Bremsbetrag kleiner oder gleich dem maximalen regenerativen Bremsbetrag ist; und
Steuern des Motors (34) durch die Steuerung (40), so dass das Bremsen entsprechend dem maximalen regenerativen Bremsbetrag durchgeführt wird, wenn der angeforderte regenerative Bremsbetrag den maximalen regenerativen Bremsbetrag überschreitet.

10. Steuerungsverfahren nach einem der Ansprüche 7 bis 9, weiterhin umfassend:
Bestimmen eines Soll-Pedaldrehmoments basierend auf der erfassten Position des Pedals (23) und der erfassten Position des Motors (34) durch die Steuerung (40), wenn das Bremsen bestimmt wird; und
Steuern eines Stroms des Generators (21) durch die Steuerung (40), so dass ein Pedaldrehmoment entsprechend dem erfassten Strom des Generators (21) das bestimmte Soll-Pedaldrehmoment erreicht.

11. Steuerungsverfahren nach einem der Ansprüche 7 bis 10, wobei das Bestimmen des Fahrens oder des Bremsens das Bestimmen des Fahrens beinhaltet, wenn die aktuelle Fahrtrichtung gleich der Drehrichtung des Pedals (23) ist oder wenn die Drehzahl des Motors (34) null ist und die Drehzahl des Pedals (23) nicht null ist, und
das Steuerungsverfahren weiterhin umfasst:
Bestimmen eines Soll-Pedaldrehmoments basierend auf einer Positionsdifferenz zwischen der erfassten Position des Pedals (23) und der erfassten Position des Motors (34) durch die Steuerung (40), wenn das Fahren bestimmt wird;
Bestimmen einer Soll-Motorbeschleunigung entsprechend dem bestimmten Soll-Pedaldrehmoment durch die Steuerung (40); und
Steuern eines Stroms des Motors (34) durch die Steuerung (40), so dass eine Beschleunigung des Motors (34) die bestimmte Soll-Motorbeschleunigung erreicht.

12. Elektrofahrrad, umfassend:
ein Pedal (23), das dazu vorgesehen ist, von einem Radfahrer gedreht zu werden;
ein Hinterrad (32) und ein Vorderrad (12); und
ein System nach einem der Ansprüche 1 bis 6;
wobei das Pedal (23) mit dem Generator (21) gekoppelt ist, um den Generator (21) anzutreiben; und
wobei der Motor an zumindest einem Rad, und zwar dem Vorderrad (12) oder dem Hinterrad (32), montiert ist und so konfigurier ist, dass er eine Drehkraft auf das zumindest eine Rad ausübt.

## Revendications

1. Système d'entraînement d'un vélo électrique, ledit système comprenant :
un générateur (21) prévu pour générer une tension par conversion d'un mouvement de rotation d'une pédale (23) du vélo électrique en énergie électrique ;
un capteur de courant de générateur (80) prévu pour détecter une sortie de courant par le générateur (21) ;
un capteur de position de pédale (50) prévu pour détecter une position de la pédale (23) ;
un moteur (34) prévu pour être monté sur au moins une roue entre une roue avant (12) et une roue arrière (32), et prévu pour fournir une force de rotation à ladite au moins une roue ;
un capteur de position du moteur (60) prévu pour détecter une position du moteur (34) ;
un capteur de courant moteur (70) prévu pour détecter un courant du moteur (34) ; et un contrôleur (40) prévu pour commander les courants du générateur (21) et du moteur (34), où le contrôleur (40) est prévu pour
- détecter une vitesse de rotation et un sens de rotation du moteur (34) sur la base de la position détectée du moteur (34),
- déterminer une direction de déplacement actuelle en fonction du sens de rotation du moteur (34),
- détecter une vitesse de rotation et un sens de rotation de la pédale (23) sur la base de la position détectée de la pédale (23),
- déterminer un déplacement ou un freinage sur la base de la direction de déplacement actuelle et du sens de rotation de la pédale (23), le contrôleur (40) étant prévu pour déterminer un freinage si la direction de déplacement actuelle et le sens de rotation de la pédale (23) sont opposés et qu'une commande de freinage par récupération est entrée, et
- commander le moteur (34) de manière à appliquer un freinage par récupération si un freinage est déterminé.

2. Système selon la revendication 1, où le contrôleur (40) est prévu pour :
déterminer une intensité de freinage par récupération demandée sur la base de la vitesse de rotation de la pédale (23) si un freinage est déterminé, et commander le moteur (34) de manière à appliquer un freinage en fonction de l'intensité de freinage par récupération demandée ; et
accroître l'intensité de freinage par récupération demandée à mesure de la progression la vitesse de rotation de la pédale (23).

3. Système selon la revendication 1 ou la revendication 2, où le contrôleur (40) est prévu pour déterminer une intensité de freinage par récupération demandée sur la base de la vitesse de rotation de la pédale (23) si un freinage est déterminé, déterminer une intensité de freinage par récupération maximale sur la base d'un environnement de déplacement actuel du vélo électrique, déterminer si l'intensité de freinage par récupération demandée est inférieure ou égale à l'intensité de freinage par récupération maximale, commander l'application par le moteur (34) d'un freinage en fonction de l'intensité de freinage par récupération demandée si l'intensité de freinage par récupération demandée est inférieure ou égale à l'intensité de freinage par récupération maximale, et commander l'application par le moteur (34) d'un freinage en fonction de l'intensité de freinage par récupération maximale si l'intensité de freinage par récupération demandée est supérieure à l'intensité de freinage par récupération maximale.

4. Système selon l'une des revendications précédentes, où le contrôleur (40) est prévu pour déterminer un couple de pédale cible sur la base de la position détectée de la pédale (23) et de la position détectée du moteur (34) si un freinage est déterminé, et commander le courant du générateur (21) de sorte qu'un couple de pédale en fonction du courant détecté du générateur (21) atteint le couple de pédale cible déterminé.

5. Système selon l'une des revendications précédentes, où le contrôleur (40) est prévu pour :
déterminer le déplacement si la direction de déplacement actuelle est identique au sens de rotation de la pédale (23), ou si la vitesse de rotation du moteur (34) est nulle et que la vitesse de rotation de la pédale (23) n'est pas nulle ; et
déterminer un couple de pédale cible sur la base d'une différence de position entre la position détectée de la pédale (23) et la position détectée du moteur (34) si le déplacement est déterminé, déterminer une accélération de moteur cible en fonction du couple de pédale cible déterminé, et commander le courant du moteur (34) de sorte qu'une accélération du moteur (34) atteint l'accélération de moteur cible déterminée.

6. Système selon l'une des revendications précédentes, où le contrôleur (40) est prévu pour déterminer un déplacement en sens inverse si la vitesse de rotation du moteur (34) est nulle et que le sens de rotation de la pédale (23) est un sens inverse et que sa vitesse de rotation n'est pas nulle.

7. Procédé de commande d'un système d'entraînement d'une bicyclette électrique comprenant un générateur (21) prévu pour générer une tension par conversion d'un mouvement de rotation d'une pédale en énergie électrique, et un moteur monté sur au moins une roue entre une roue avant (12) et une roue arrière (32), et prévu pour fournir une force de rotation à ladite au moins une roue, ledit procédé de commande comprenant :
la détection d'une position de la pédale (23) au moyen d'un capteur de position de pédale (50) ; la détection d'une position du moteur (34) au moyen d'un capteur de position du moteur (60) ; la détection, par un contrôleur (40), d'une vitesse de rotation et d'un sens de rotation du moteur (34) sur la base de la position détectée du moteur (34) ;
la détermination, par le contrôleur (40), d'une direction de déplacement actuelle sur la base du sens de rotation du moteur (34) ;
la détection, par le contrôleur (40), d'une vitesse de rotation et d'un sens de rotation de la pédale (23) sur la base de la position détectée de la pédale (23) ;
la détermination, par le contrôleur (40), d'un déplacement ou d'un freinage sur la base de la direction de déplacement actuelle et du sens de rotation de la pédale (23), un freinage étant déterminé si la direction de déplacement actuelle et le sens de rotation de la pédale (23) sont opposés et qu'une commande de freinage par récupération est entrée ; et
la commande du moteur (34) par le contrôleur (40), de manière à appliquer un freinage par récupération si un freinage est déterminé.

8. Procédé de commande selon la revendication 7, comprenant en outre :
détermination, par le contrôleur (40), d'une intensité de freinage par récupération demandée sur la base de la vitesse de rotation de la pédale (23) si un freinage est déterminé ; et
la commande du moteur (34) par le contrôleur (40) de manière à appliquer un freinage en fonction de l'intensité de freinage par récupération demandée,
où la détermination de l'intensité de freinage par récupération demandée comprend l'augmentation de l'intensité de freinage par récupération demandée à mesure que la vitesse de rotation de la pédale (23) augmente.

9. Procédé de commande selon la revendication 7 ou la revendication 8, comprenant en outre :
la détermination, par le contrôleur (40), d'une intensité de freinage par récupération demandée sur la base de la vitesse de rotation de la pédale (23) si un freinage est déterminé ;
la détermination, par le contrôleur (40), d'une intensité maximale de freinage par récupération sur la base d'un environnement de déplacement actuel du vélo électrique ;
la détermination, par le contrôleur (40), si l'intensité de freinage par récupération demandée est inférieure ou égale à l'intensité maximale de freinage par récupération ;
la commande du moteur (34) par le contrôleur (40), de manière à appliquer un freinage en fonction de l'intensité de freinage par récupération demandée si l'intensité de freinage par récupération demandée est inférieure ou égale à l'intensité de freinage par récupération maximale ; et
la commande du moteur (34) par le contrôleur (40), de manière à appliquer un freinage en fonction de l'intensité maximale de freinage par récupération si l'intensité demandée de freinage par récupération est supérieure à l'intensité maximale de freinage par récupération.

10. Procédé de commande selon l'une des revendications 7 à 9, comprenant en outre :
la détermination, par le contrôleur (40), d'un couple de pédale cible sur la base de la position détectée de la pédale (23) et de la position détectée du moteur (34) si un freinage est déterminé ; et
la commande, par le contrôleur (40), d'un courant du générateur (21), de sorte qu'un couple de pédale en fonction du courant détecté du générateur (21) atteint le couple de pédale cible déterminé.

11. Procédé de commande selon l'une des revendications 7 à 10, où la détermination du déplacement ou du freinage comprend la détermination du déplacement si la direction de déplacement actuelle est identique au sens de rotation de la pédale (23), ou si la vitesse de rotation du moteur (34) est nulle et que la vitesse de rotation de la pédale (23) n'est pas nulle, et
où ledit procédé de commande comprend en outre :
la détermination, par le contrôleur (40), d'un couple de pédale cible sur la base d'une différence de position entre la position détectée de la pédale (23) et la position détectée du moteur (34) si le déplacement est déterminé ;
la détermination, par le contrôleur (40), d'une accélération cible du moteur en fonction du couple de pédale cible déterminé ; et
la commande, par le contrôleur (40), d'un courant du moteur (34) de sorte qu'une accélération du moteur (34) atteint l'accélération de moteur cible déterminée.

12. Vélo électrique, comprenant :
une pédale (23) prévue pour être entraînée en rotation par un cycliste ;
une roue arrière (32) et une roue avant (12) ; et
un système selon l'une des revendications 1 à 6 ;
où la pédale (23) est raccordée au générateur (21) pour entraîner le générateur (21) ; et
le moteur est monté sur au moins une roue entre la roue avant (12) et la roue arrière (32), et
est prévu pour fournir une force de rotation à ladite au moins une roue.
